# FASCICULE DE BREVET EUROPEEN

(11) **EP 3 902 693 B1**
(45) Date de publication et mention de la délivrance du brevet: **08.02.2023**
(21) Numéro de dépôt: 19832145.7
(22) Date de dépôt: 24.12.2019
(51) Int. Cl.: C08L 7/00, B60C 11/00, C08K 3/04, B60C 1/00, C08K 3/11, C08K 5/00, C08K 3/06

(54) **COMPOSITION ELASTOMERIQUE AVEC NOIR GROSSIER**
ELASTOMERISCHE ZUSAMMENSETZUNG MIT GROBEM RUSS
ELASTOMERIC COMPOSITION WITH COARSE CARBON BLACK

(30) Priorité: 28.12.2018 FR 1874302
(43) Date de publication de la demande: 03.11.2021
(73) Titulaire: COMPAGNIE GENERALE DES ETABLISSEMENTS MICHELIN, 63000 Clermont-Ferrand (FR)
(72) Inventeur: COUE, Jean, 63040 CLERMONT-FERRAND CEDEX 09 (FR); FERRAND, Thomas, 63040 CLERMONT-FERRAND CEDEX 9 (FR)
(74) Mandataire: Bocchi, Brigitte
(86) Numéro de dépôt international: PCT/EP2019/087003
(87) Numéro de publication internationale: WO 2020/136190

(56) Documents cités:
- FR-A1- 3 058 148
- FR-A1- 3 058 149
- FR-A3- 3 059 602

## Description

L'invention se rapporte à une composition élastomérique (ou de caoutchouc) comprenant une matrice élastomérique, un noir de carbone grossier, un plastifiant, et un système de réticulation, ainsi qu'à un pneumatique comprenant une sous-couche dont une partie au moins est constituée de ladite composition élastomérique.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une armature de sommet surmontée radialement d'une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial CP est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ».

Comme on le sait, les pneumatiques pour applications routières, et tout particulièrement les pneumatiques pour véhicules de tourisme apportent une contribution essentielle aux performances des véhicules en matière de résistance ou roulement (et donc d'efficacité énergétique des véhicules), d'adhérence, de réponse dynamique pour le guidage des véhicules (notamment en virage) et d'usure (et donc de coût global d'utilisation des véhicules). Parmi les paramètres de conception des pneumatiques, l'homme du métier connaît l'importance du choix du matériau constitutif de la bande de roulement et du matériau constitutif d'une sous-couche de la bande de roulement le cas échéant. Un exemple de sous-couche, c'est-à-dire de couche de caoutchouc insérée entre l'armature de sommet et le matériau de la bande de roulement, est décrit dans le document FR 2 954 333. En général, on utilise des matériaux de sous-couche sous la bande de roulement de manière à améliorer la résistance au roulement du pneumatique avec un matériau peu hystérétique, ou encore pour rigidifier la bande de roulement en cisaillement, mais avec des rigidités modestes pour ne pas trop s'opposer à la mise à plat de la bande de roulement du pneumatique dans l'aire de contact avec le sol.

En particulier, la sous-couche contribue à la résistance au roulement du pneumatique. En abaissant sa rigidité et son hystérèse on peut améliorer de façon importante la résistance au roulement du pneumati que. FR 3 059 602 décrit un pneumatique ayant un axe de rotation et un plan médian perpendiculaire à l'axe de rotation, et comprenant deux bourrelets, deux flancs reliés aux bourrelets, un sommet relié aux extrémités des deux flancs, le sommet comportant une armature de sommet, une bande de roulement radialement extérieure, la bande de roulement comprenant une pluralité d'éléments de sculpture avec des faces latérales et une face de contact destinée à venir en contact avec la chaussée pendant le roulage du pneumatique. Entre l'armature de sommet et la bande de roulement se trouve une sous-couche caoutchouteuse. Le mélange de cette sous-couche peut être à faible hystérèse et faible rigidité et ainsi améliorer la résistance au roulement du pneumatique ou être plus rigide que le mélange caoutchouteux constituant de la bande de roulement. Ce document décrit une composition des éléments circonférentiels où le noir de carbone (N326) présente une surface BET de 78 m² /g et un COAN de 68 ml/g,.

La difficulté est d'obtenir des niveaux de rigidité et d'hystérèse bas tout en conservant un renforcement suffisant pour permettre au matériau de supporter sans s'endommager les sollicitations thermomécaniques liées au fonctionnement du pneu.

Ainsi, l'invention vise à fournir une composition élastomérique utilisable dans une sous-couche de bande de roulement d'un pneumatique, qui permette d'obtenir un compromis de propriétés entre d'une part une faible rigidité et une hystérèse basse et une résistance aux sollicitations thermomécaniques.

La demanderesse a découvert de façon surprenante qu'un tel objectif pouvait être atteint au moyen d'une composition élastomérique comprenant
a) une matrice élastomérique comprenant au moins 60 pce d'au moins un élastomère choisi parmi le caoutchouc naturel et les polyisoprènes synthétiques,
b) 10 à 30 pce d'un noir de carbone présentant une surface spécifique BET variant de 15 à 28 m²/g et un indice COAN variant de 20 à 60 ml/g,
c) au moins 10 pce d'au moins un plastifiant, et
d) un système de réticulation.

Dans la présente invention, sauf indication expresse différente, tous les pourcentages (%) indiqués sont des % en poids.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Par « matrice élastomérique » au sens de la présente invention, on entend l'ensemble des élastomères (ou caoutchoucs) de la composition de caoutchouc. Ainsi, la matrice élastomérique peut notamment être constituée d'un seul élastomère mais aussi d'un coupage de deux ou de plusieurs élastomères.

Dans la présente demande, on entend par « partie pour cent d'élastomère » ou « pce », la partie en poids d'un constituant pour 100 parties en poids du ou des élastomères de la matrice élastomérique, c'est-à-dire du poids total du ou des élastomères qu'ils soient thermoplastiques ou non thermoplastiques, présents dans la matrice élastomérique. Ainsi, un constituant à 60 pce signifiera par exemple 60 g de ce constituant pour 100 g d'élastomère de la matrice élastomérique.

Dans la composition élastomérique selon l'invention, la matrice élastomérique comprend au moins 60 pce d'au moins un élastomère choisi parmi le caoutchouc naturel et les polyisoprènes synthétiques.

De préférence, le ou les élastomères choisis parmi le caoutchouc naturel et les polyisoprènes synthétiques représentent au moins 80 pce, de préférence 100 pce de la matrice élastomérique.

Le ou les polyisoprènes synthétiques sont de préférence des polyisoprènes cis-1,4 de synthèse. Parmi ces polyisoprènes de synthèse, sont utilisés de préférence les polyisoprènes ayant un taux molaire de liaisons cis-1,4 supérieur à 90%, de préférence encore supérieur à 95%, mieux supérieur à 98%.

De préférence, l'élastomère est le caoutchouc naturel.

Outre le ou les élastomères choisis parmi le caoutchouc naturel et les polyisoprènes synthétiques, la composition élastomérique selon l'invention peut éventuellement comprendre un ou plusieurs autres élastomères.

De tels autres élastomères sont généralement des élastomères diéniques bien connus de l'homme du métier, ou bien des élastomères thermoplastiques.

Outre les élastomères précédemment décrits, la composition de la composition élastomérique pourrait aussi comporter, toujours selon une fraction pondérale minoritaire par rapport aux élastomères, des polymères autres que des élastomères, tels que par exemple des polymères thermoplastiques. Lorsqu'ils sont présents dans la composition élastomérique, on préfère que le taux total de polymères thermoplastiques non élastomériques soit inférieur à 40 pce, préférentiellement compris entre 5 et 30 pce, et plus préférentiellement compris entre 5 et 15 pce.

A titre de polymère thermoplastique, on peut citer par exemple le polystyrène.

La composition élastomérique selon l'invention comprend 10 à 30 pce, de préférence de 20 à 30 pce, mieux de 20 à 25 pce, d'un noir de carbone présentant une surface spécifique BET variant de 15 à 28 m2/g et un indice COAN variant de 20 à 60 ml/g.

Dans la présente invention, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,2]

L'indice d'absorption d'huile par des d'échantillons comprimés de noir de carbone (COAN) est une mesure de la capacité du noir de carbone à absorber des liquides. Cette propriété est elle-même fonction de la structure du noir de carbone. L'indice COAN est déterminé en utilisant la norme ISO 4656/2012 à l'aide d'un absorptiomètre, avec des d'échantillons comprimés de noir de carbone.

A titre de noir de carbone utilisable dans la composition élastomérique selon l'invention, on peut citer le XT1003. Tout autre noir de carbone issu d'un autre fournisseur et présentant les mêmes caractéristiques est utilisable.

Comme expliqué précédemment, la composition élastomérique selon l'invention comprend au moins 10 pce d'au moins un plastifiant.

De préférence, le ou les plastifiants représentent au plus 60 pce, de préférence, au plus 40 pce, de préférence encore de 20 à 30 pce.

De manière connue de l'homme de l'art des compositions de caoutchouc pour pneumatique, le plastifiant est de préférence choisi parmi les résines hydrocarbonées de haute température de transition vitreuse (Tg), les résines hydrocarbonées de faible Tg, les huiles plastifiantes, et leurs mélanges. De préférence, le plastifiant est choisi parmi les résines hydrocarbonées de haute Tg, les huiles plastifiantes, et leurs mélanges.

Par définition, une résine hydrocarbonée de haute Tg est par définition un solide à température et pression ambiante (20°C, 1 atm), tandis qu'une huile plastifiante est liquide à température ambiante et qu'une résine hydrocarbonée de faible Tg est visqueuse à température ambiante.

Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants ou agents tackifiants dans des matrices polymériques. Elles sont par nature au moins partiellement miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). De manière connue, ces résines hydrocarbonées peuvent être qualifiées aussi de résines thermoplastiques en ce sens qu'elles se ramollissent par chauffage et peuvent ainsi être moulées.

Le point de ramollissement des résines hydrocarbonées est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha- méthylstyrène, l'indène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

De manière connue, les résines hydrocarbonées de haute Tg sont des résines hydrocarbonées, thermoplastiques, dont la Tg est supérieure à 20°C.

De préférence, la résine plastifiante hydrocarbonée de haute Tg présente au moins une quelconque des caractéristiques suivantes :
- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, la résine plastifiante hydrocarbonée de haute Tg présente l'ensemble des caractéristiques préférentielles ci-dessus.

A titre d'exemples d'autres résines préférentielles, on peut citer les résines alpha-méthyl-styrène modifiées phénol.

Selon un mode particulier de réalisation de l'invention, lorsqu'elle est incluse dans la composition, le taux de résine plastifiante hydrocarbonée de haute Tg supérieure à 20°C est compris dans un domaine allant de 5 à 40 pce, préférentiellement allant de 10 à 30 pce, encore plus préférentiellement de 15 à 25 pce.

Le plastifiant peut optionnellement comprendre une résine hydrocarbonée visqueuse à 20 °C, dite « de faible Tg », c'est-à-dire qui par définition présente une Tg comprise dans un domaine allant de -40 °C à 20°C.

De préférence, la résine plastifiante hydrocarbonée de faible Tg présente au moins une quelconque des caractéristiques suivantes :
- une Tg comprise entre -40°C et 0°C, plus préférentiellement entre - 30°C et 0°C et plus préférentiellement encore entre -20°C et 0°C ;
- une masse moléculaire moyenne en nombre (Mn) inférieure à 800 g/mol, de préférence inférieure à 600 g/mol et plus préférentiellement inférieure à 400 g/mol ;
- un point de ramollissement compris dans un domaine allant de 0 à 50°C, préférentiellement de 0 à 40°C, plus préférentiellement de 10 à 40°C, de préférence de 10 à 30°C;
- un indice de polymolécularité (Ip) inférieur à 3, plus préférentiellement inférieur à 2 (rappel : Ip = Mw/Mn avec Mw masse moléculaire moyenne en poids).

Plus préférentiellement, la résine hydrocarbonée de faible Tg présente l'ensemble des caractéristiques préférentielles ci-dessus.

Le plastifiant peut contenir également une huile d'extension (ou huile plastifiante) liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères, est utilisable. A température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante.

Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

Selon un mode particulier de réalisation de l'invention, lorsqu'elle est incluse dans la composition le taux d'huile d'extension est compris entre 5 et 30 pce, plus préférentiellement entre 10 et 25 pce, encore plus préférentiellement entre 12 et 21 pce. En dessous de 5 pce d'huile ou au-dessus de 45 pce d'huile, la composition pourrait être moins performante en processabilité et compromis rigidité/hystérèse.

La composition élastomérique selon l'invention peut également comprendre un système de réticulation.

De préférence, le système de réticulation est à base de soufre ou d'un donneur de soufre.

Par l'expression « système de réticulation à base de », il faut entendre que le système de réticulation comporte un mélange et/ou le produit de réaction des différents constituants utilisés dans le système de réticulation, et en particulier le soufre ou le donneur de soufre, certains de ces constituants de base étant susceptibles de, ou destinés à, réagir entre eux ou avec les autres constituants de la composition du flanc du pneumatique, au moins en partie, lors des différentes phases de fabrication de la composition du flanc du pneumatique.

Le système de réticulation peut être un système de vulcanisation. Dans ce cas, il est préférentiellement à base de soufre ou à base d'un donneur de soufre et d'un accélérateur de vulcanisation, en particulier un accélérateur primaire de vulcanisation.

Parmi les donneurs de soufre on peut citer par exemple les alkyl phénol disulfures (APDS) tel que par exemple le disulfure de para-tertiobutylphénol.

Avantageusement, le taux en soufre ou en donneur de soufre est compris entre 0,5 et 2 pce, de préférence compris entre 0,5 et 1,5 pce, de préférence encore entre 0,5 et 1,4 pce.

On peut utiliser comme accélérateur primaire tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé «TBSI»), dibenzyldithiocarbamate de zinc (en abrégé « ZBEC ») et les mélanges de ces composés.

De préférence, on utilise un accélérateur primaire du type sulfénamide.

De manière particulièrement préférée, l'accélérateur primaire de vulcanisation est le N-cyclohexyl-2-benzothiazyle sulfénamide (CBS).

Selon un mode de réalisation particulier de l'invention, le taux en accélérateur(s) de vulcanisation varie de 0,2 à 10 pce, de préférence varie de 0,2 à 7 pce, plus préférentiellement de 0,6 à 2 pce.

Avantageusement, le ratio pondéral soufre ou donneur de soufre / accélérateur de vulcanisation varie de 0,25 à 4.

A ce système de vulcanisation viennent optionnellement s'ajouter, divers accélérateurs secondaires ou activateurs de vulcanisation connus tels qu'oxyde de zinc, acide stéarique, dérivés guanidiques (en particulier diphénylguanidine), etc.

La composition élastomérique utilisable selon l'invention peut également comprendre une charge renforçante autre que les noirs de carbone utilisés selon l'invention et définis précédemment.

En particulier, on peut utiliser tout type de charge habituellement utilisée pour la fabrication de pneumatiques, par exemple une charge organique telle que du noir de carbone autre que ceux décrits précédemment et utilisés selon l'invention, une charge inorganique telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTI), comme par exemple les noirs N115, N134, N234, N326, N330, N339, N347, N375, ou encore, selon les applications visées, les noirs de séries plus élevées (par exemple N660, N683, N772), voire même N990.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites « HDS »), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition élastomérique (noir de carbone autre que ceux définis précédemment et utilisés selon l'invention et/ou charge inorganique renforçante telle que silice) est compris dans un domaine allant de 0 à 30 %, ce qui correspond environ à un taux de 0 à 100 pce pour une composition élastomérique sans plastifiant. Préférentiellement la composition élastomérique utilisable selon l'invention comprend moins de 30 pce de charge renforçante et plus préférentiellement moins de 10 pce.

Selon une variante préférentielle de l'invention, la composition élastomérique ne contient pas de charge renforçante autre que les noirs de carbone définis précédemment et utilisés selon l'invention.

De la même manière, la composition élastomérique utilisable selon l'invention peut contenir une ou plusieurs charges micrométriques, inertes telles que les charges lamellaires connues de l'homme de l'art.

De préférence, la composition élastomérique utilisable selon l'invention ne contient pas de charge micrométrique.

La composition élastomérique décrite précédemment peut comporter par ailleurs les divers additifs usuellement présents dans les pneumatiques et connus de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique.

De manière préférentielle, la composition élastomérique ne contient pas tous ces additifs en même temps et de manière encore plus préférentielle, la composition élastomérique ne contient aucun de ces agents.

La présente invention a encore pour objet un pneumatique ayant un axe de axe de rotation et un plan médian (CP) perpendiculaire à la rotation, comprenant
- une armature de sommet,
- une bande de roulement radialement à l'extérieur de l'armature de sommet, la bande de roulement s'étendant axialement entre deux épaules, la bande de roulement comprenant une face de contact destinée à venir en contact avec la chaussée pendant le roulage du pneumatique, la bande de roulement comprenant au moins un mélange caoutchouteux de rigidité M donnée, et
- une sous-couche disposée radialement extérieurement à l'armature de sommet et radialement intérieurement à la bande de roulement, dans lequel, d'un côté au moins axialement par rapport au plan médian, la sous couche comporte :
   - une première couche de base disposée radialement sur l'armature de sommet et axialement entre le plan médian et un bord de transition, le bord de transition étant situé axialement entre le plan médian et une épaule, ladite première couche de base étant constituée par un mélange caoutchouteux de rigidité A donnée,
   - une deuxième couche de base disposée radialement sur l'armature de sommet et axialement entre le bord de transition et une extrémité épaule, ladite deuxième couche de base étant constituée par une composition élastomérique telle que précédemment,
   - une couche de recouvrement disposée radialement sur la première couche de base et sur la deuxième couche de base et radialement à l'intérieur de la bande de roulement et axialement au moins en tronçons situés entre le plan médian et l'extrémité épaule, ladite couche de recouvrement étant constituée par un mélange caoutchouteux de rigidité C donnée,
   - la rigidité de la composition élastomérique étant plus petite que la rigidité A qui est plus petite que la rigidité C, et la rigidité C est plus grande que la rigidité M.

Selon un mode de réalisation particulier, la bande de roulement comporte des blocs de sculpture séparés par des sillons orientés essentiellement circonférentiellement, caractérisé en ce que la couche de recouvrement est, axialement en regard de certains blocs de sculpture, prolongée radialement vers l'extérieur par au moins un élément renforçant s'étendant radialement de la surface radialement extérieure de la couche de recouvrement vers l'extérieur de la bande de roulement jusqu'à une hauteur radiale supérieure à 75% de l'épaisseur radiale de la bande de roulement, ledit élément renforçant étant de largeur axiale variable, depuis une valeur maximale inférieure à 50% de la largeur axiale dudit bloc de sculpture, ladite largeur axiale allant en décroissant lorsque l'on se déplace radialement vers le haut.

### Description des figures

[Fig 1] montre une coupe méridienne schématique d'un pneumatique conforme à un premier mode de réalisation de l'invention.
[Fig 2] est une représentation simplifiée d'un deuxième mode de réalisation de l'invention.

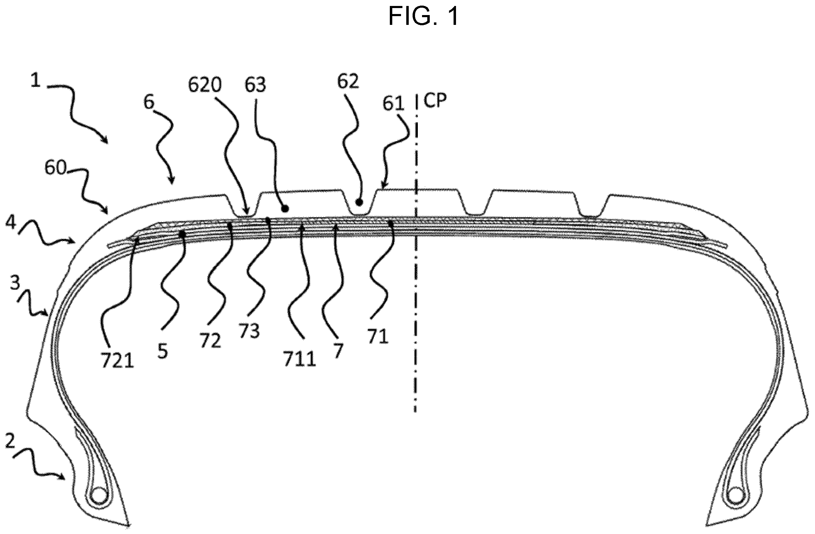

On voit à la figure 1 un pneumatique 1, un plan équatorial CP, deux bourrelets 2 et deux flancs 3 reliés chacun à un bourrelet 2. Le pneumatique comporte un sommet 4, qui comporte une armature de sommet 5 et une bande de roulement 6. La bande de roulement s'étend axialement d'une épaule 60 à l'autre épaule. La bande de roulement comprend une face de contact 61 destinée à venir en contact avec la chaussée pendant le roulage du pneumatique. La bande de roulement 6 comporte des blocs de sculpture 63 séparés par des sillons 62 orientés essentiellement circonférentiellement. Chaque sillon 62 est délimité radialement vers l'intérieur par un fond de sillon 620.

Le sommet comporte aussi une sous-couche 7 disposée radialement extérieurement à l'armature de sommet 5 et radialement intérieurement à la bande de roulement 6. Cette sous-couche est formée de trois parties : une première couche de base 71, une deuxième couche de base 72 et une couche de recouvrement 73.

La première couche de base 71 est disposée radialement directement sur l'armature de sommet 5. Comme connu en soi, l'armature de sommet comporte des couches de câbles ou de renforts mono-filamentaires en général enrobés d'une mince couche de caoutchouc. Dans le contexte de la présente invention, par la précision que la première couche de base 71 est disposée radialement directement sur l'armature de sommet 5, on indique qu'elle est en contact avec les câbles ou renforts, compte non tenu de leur enrobage de caoutchouc. On voit que la première couche de base 71 est disposée axialement entre le plan médian CP et un bord de transition 711 ; le bord de transition 711 est situé axialement entre le plan médian CP et une épaule 60 ; dans ce mode de réalisation, le bord de transition 711 est unique dans chacune des moitiés axiales de part et d'autre du plan CP.

On voit une deuxième couche de base 72 disposée radialement directement (voir remarque ci-dessus) sur l'armature de sommet 5 et axialement entre le bord de transition 711 et une extrémité épaule 721. On voit également une couche de recouvrement 73 disposée radialement sur la première couche de base 71 et sur la deuxième couche de base 72 et radialement à l'intérieur de la bande de roulement 6 et axialement au moins en tronçons situés entre le plan médian CP et l'extrémité épaule 60. Notons que, dans ce mode de réalisation, le matériau de la bande de roulement 6 apparaît dans le fond de rainure 620 ; le matériau de la couche de recouvrement 73 est donc revêtu (radialement vers le haut) par un film de matériau de bande de roulement 6 d'épaisseur très faible.

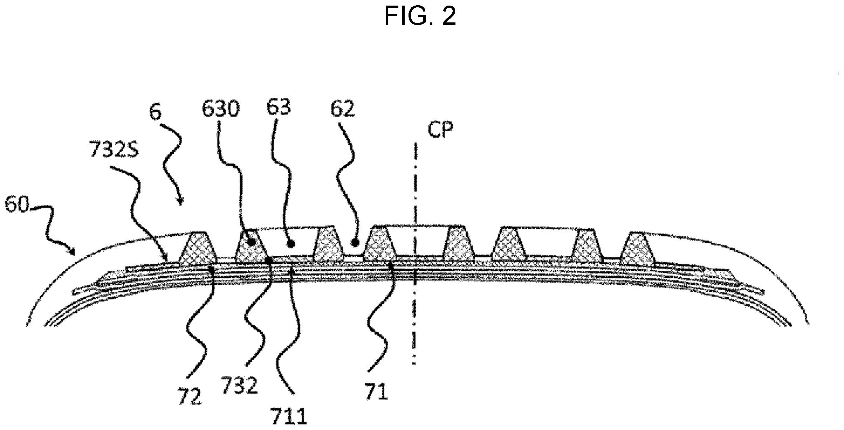

Afin d'améliorer la résistance au roulement et de gagner en même temps en rigidité de dérive, on peut utiliser dans la partie usante de la bande de roulement, des éléments 630 en forme de coin. A la figure 2, est illustrée un cinquième mode de réalisation dans laquelle une couche de recouvrement 732, axialement au niveau de certains blocs de sculpture 63, est prolongée radialement vers l'extérieur par un élément renforçant 630 en forme de coin (vu en coupe méridienne). Cet élément renforçant 630 s'étend radialement de la surface radialement extérieure 732S de la couche de recouvrement 732 vers l'extérieur de la bande de roulement 6 jusqu'à une hauteur radiale supérieure à 75% de l'épaisseur radiale de la bande de roulement. Ledit élément renforçant 630 est de largeur axiale variable, depuis une valeur maximale inférieure à 50% de la largeur axiale dudit bloc de sculpture, ladite largeur axiale allant en décroissant lorsque l'on se déplace radialement vers le haut. L'angle formé en section radiale par les deux parois latérales dudit élément renforçant 630 est de préférence compris entre 10° et 50° degrés, soit par exemple 40. La bande de roulement comporte un tel élément renforçant 630 de part et d'autre de chaque sillon 62. Chaque élément renforçant est avantageusement constitué du même mélange caoutchouteux que la couche de recouvrement 732, ce qui permet de les extruder en une seule et même opération avec la couche de recouvrement 732.

### Exemples

On étudie les propriétés dynamiques et les courbes force-allongement en extension uniaxiale de différentes compositions élastomériques.

### Préparation des compositions

Les compositions testées sont présentées dans le tableau 1. Les quantités sont données en pce.

La composition ML XT1003 est selon l'invention. Les compositions ML N550, ML N660, ML N772 et ML N990 sont des compositions comparatives.

**[Tableau 1]**

| ***Composition*** | **ML N550** | **ML N660** | **ML N772** | **ML N990** | **ML XT1003** |
|---|---|---|---|---|---|
| NR | 100 | 100 | 100 | 100 | 100 |
| N550 | 23 | | | | |
| N660 | | 23 | | | |
| N772 | | | 23 | | |
| N990 | | | | 23 | |
| BirlaXT1003 (1) | | | | | 23 |
| DPG (2) | 2 | 2 | 2 | 2 | 2 |
| Résine Ther 8644 (3) | 14.6 | 14.6 | 14.6 | 14.6 | 14.6 |
| HTO (4) | 11.6 | 11.6 | 11.6 | 11.6 | 11.6 |
| 6PPD (5) | 2.2 | 2.2 | 2.2 | 2.2 | 2.2 |
| ZnO | 3 | 3 | 3 | 3 | 3 |
| Acide stéarique | 2 | 2 | 2 | 2 | 2 |
| Soufre Sol 2H | 0.8 | 0.8 | 0.8 | 0.8 | 0.8 |
| CBS (6) | 3.2 | 3.2 | 3.2 | 3.2 | 3.2 |

| | | | | | |
|---|---|---|---|---|---|
| (1) noir de carbone commercialisé par la société Birla (2) accélérateur diphénylguanidine (« Perkacit » DPG de la société Flexsys (3) plastifiant (4) huile de tournesol (plastifiant) (5) antioxydant « Santoflex 6PPD » de la société Solutia (6) accélérateur « Santocure CBS » de la société Solutia | | | | | |

Les mélanges sont fabriqués sur un mélangeur interne. La marche suivie pour l'introduction successive des différents ingrédients est classique et donnée dans le tableau 2.

**[Tableau 2]**

| ***Température*** | ***Actions*** |
|---|---|
| 80°C | Introduction gomme + Noir de carbone + BU |
| 130°C | Introduction Résine |
| 130°C | Introduction Huile |
| 130°C | Tombée |

| | |
|---|---|
| BU : ingrédients tels que agents de protection (anti-oxydant) et le système d'activation (ZnO et acide stéarique). | |

Le mélange obtenu est travaillé sur outil à cylindres. A ce stade, le système de vulcanisation est également introduit par un protocole classique.

### Description des méthodes de mesure

### Propriétés dynamiques

Les propriétés dynamiques G* et G" sont mesurées sur un viscoanalyseur (Metravib V A4000), selon la norme ASTM D 5992 - 96. On enregistre la réponse d'un échantillon de composition vulcanisée voulue (éprouvette cylindrique de 4 2 mm d'épaisseur et de 400 78 mm2 de section), soumis à une sollicitation sinusoïdale en cisaillement simple alterné, à la fréquence de 10Hz, à une température de 40°C et selon la norme ASTM D 1349 - 99. On effectue un balayage en amplitude de déformation crête à crête de 0,1 à 100% (cycle aller), puis de 100% à 1 % (cycle retour). Les résultats exploités sont le module élastique complexe de cisaillement dynamique (G') et la tangente de l'angle de déphasage entre la contrainte et la déformation ou rapport G'/G".

Plus le module G' est faible, plus le matériau est rigide.

Plus la valeur de tan δ est faible, plus faible est l'hystérèse.

Courbes force-allongement en extension uniaxiale

Elles sont réalisées sur une machine de traction INSTRON à une température de 60°C et une vitesse de déplacement traverse de 500mm/min.

L'éprouvette est du type H2. On exploite le ratio du module sécant à 300% d'allongement par le module sécant à 100% d'allongement. Plus ce ratio est élevé, plus le renforcement (résistance thermomécanique) est élevé.

### Résultats

Les résultats sont donnés dans le tableau 3.

**[Tableau 3]**

| **Performance** | **ML XT1003** | **ML N990** | **ML N772** | **ML N660** | **ML N550** |
|---|---|---|---|---|---|
| **G' 40°C, 10Hz, 10% def** | *0.29* | *0.34* | *0.4* | *0.43* | *0.44* |
| **TanD 40°C, 10Hz, 10% def** | *0.051* | *0.055* | *0.06* | *0.063* | *0.078* |
| **MA300 / MA100** | *0.88* | *0.82* | *1.01* | *1.07* | *1.14* |

Les mélanges formulés avec le N990, N772, N660 et N550 ont des valeurs de G' et Tan δ à 40°C, 10Hz et 10% de déformation plus importants que pour le mélange formulé avec le XT1003.

Le N990 qui conduit aux propriétés les plus proches de celles du mélange utilisant le XT1003 en terme de G' et tan δ est beaucoup moins intéressant en termes de renforcement dans la plage de rigidité et tangente delta ciblées.

De la même façon, le N772 est un peu plus renforçant que le XT1003 mais les G' et tangente delta obtenus le disqualifient pour l'application visée.

Ainsi, le XT1003 conduit au meilleur compromis de performances rigidité-hystérèse, renforcement.

## Revendications

1. Composition élastomérique comprenant
a) une matrice élastomérique comprenant au moins 60 pce d'au moins un élastomère choisi parmi le caoutchouc naturel et les polyisoprènes synthétiques,
b) 10 à 30 pce d'un noir de carbone présentant une surface spécifique BET variant de 15 à 28 m²/g et un indice COAN variant de 20 à 60 ml/g,
c) au moins 10 pce d'au moins un plastifiant, et
d) un système de réticulation.

2. Composition élastomérique selon la revendication 1 **caractérisée en ce que** le ou les élastomères choisis parmi le caoutchouc naturel et les polyisoprènes synthétiques représentent au moins 80 pce, de préférence 100 pce de la matrice élastomérique.

3. Composition élastomérique selon la revendication 1 ou 2 **caractérisée en ce que** les polyisoprènes synthétiques sont des polyisoprènes cis-1,4 de synthèse ayant un taux molaire de liaisons cis-1,4 supérieur à 90%, de préférence supérieur à 95%, mieux supérieur à 98%.

4. Composition élastomérique selon la revendication 1 ou 2, **caractérisée en ce que** l'élastomère est le caoutchouc naturel.

5. Composition élastomérique selon l'une quelconque des revendications précédentes, **caractérisée en ce que** ledit noir de carbone représente de 20 à 30 pce, de préférence de 20 à 25 pce.

6. Composition élastomérique selon l'une quelconque des revendications précédentes, **caractérisée en ce que** le ou les plastifiants sont choisis parmi les résines hydrocarbonées de haute température de transition vitreuse (Tg), les résines hydrocarbonées de faible Tg, les huiles plastifiantes, et leurs mélanges.

7. Composition élastomérique selon l'une quelconque des revendications précédentes, **caractérisée en ce que** le ou les plastifiants représentent au plus 60 pce, de préférence, au plus 40 pce, de préférence encore de 20 à 30 pce.

8. Composition élastomérique selon l'une quelconque des revendications précédentes, **caractérisée en ce que** le système de réticulation est à base de soufre ou d'un donneur de soufre.

9. Composition élastomérique selon l'une quelconque des revendications précédentes, **caractérisée en ce que** le système de réticulation comprend un accélérateur de vulcanisation.

10. Pneumatique (1) ayant un axe de rotation et un plan médian (CP) perpendiculaire à la rotation, comprenant
- une armature de sommet (5),
- une bande de roulement (6) radialement à l'extérieur de l'armature de sommet (5), la bande de roulement (6) s'étendant axialement entre deux épaules (60), la bande de roulement comprenant une face de contact (61) destinée à venir en contact avec la chaussée pendant le roulage du pneumatique, la bande de roulement (6) comprenant au moins un mélange caoutchouteux de rigidité M donnée, et
- une sous-couche (7) disposée radialement extérieurement à l'armature de sommet (5) et radialement intérieurement à la bande de roulement (6), **caractérisé en ce que**, d'un côté au moins axialement par rapport au plan médian (CP), la sous couche (7) comporte :
- une première couche de base (71) disposée radialement sur l'armature de sommet (5) et axialement entre le plan médian (CP) et un bord de transition (711), le bord de transition (711) étant situé axialement entre le plan médian (CP) et une épaule (60), ladite première couche de base (71) étant constituée par un mélange caoutchouteux de rigidité A donnée,
- une deuxième couche de base (72) disposée radialement sur l'armature de sommet (5) et axialement entre le bord de transition (711) et une extrémité épaule (721), ladite deuxième couche de base (72) étant constituée par une composition élastomérique telle que définie à l'une quelconque des revendications précédentes,
- une couche de recouvrement (73) disposée radialement sur la première couche de base (71) et sur la deuxième couche de base (72) et radialement à l'intérieur de la bande de roulement (6) et axialement au moins en tronçons situés entre le plan médian (CP) et l'extrémité épaule (721), ladite couche de recouvrement (73) étant constituée par un mélange caoutchouteux de rigidité C donnée,
- la rigidité de la composition élastomérique étant plus petite que la rigidité A qui est plus petite que la rigidité C, et la rigidité C est plus grande que la rigidité M.

11. Pneumatique (1) selon la revendication 10, dans lequel la bande de roulement (6) comporte des blocs de sculpture (63) séparés par des sillons (62) orientés essentiellement circonférentiellement, **caractérisé en ce que** la couche de recouvrement (732) est, axialement en regard de certains blocs de sculpture (63), prolongée radialement vers l'extérieur par au moins un élément renforçant (630) s'étendant radialement de la surface radialement extérieure (732S) de la couche de recouvrement (732) vers l'extérieur de la bande de roulement (6) jusqu'à une hauteur radiale supérieure à 75% de l'épaisseur radiale de la bande de roulement, ledit élément renforçant (630) étant de largeur axiale variable, depuis une valeur maximale inférieure à 50% de la largeur axiale dudit bloc de sculpture, ladite largeur axiale allant en décroissant lorsque l'on se déplace radialement vers le haut.

## Patentansprüche

1. Elastomerzusammensetzung umfassend
a) eine Elastomermatrix, die wenigstens 60 pce von wenigstens einem Elastomer umfasst, das aus Naturkautschuk und synthetischen Polyisoprenen gewählt ist,
b) 10 bis 30 pce von einem Ruß mit einer spezifischen Oberfläche BET, die von 15 bis 28 m²/g variiert, und einem COAN-Index, der von 20 bis 60 ml/g variiert,
c) wenigstens 10 pce von wenigstens einem Weichmacher, und
d) ein Vernetzungssystem.

2. Elastomerzusammensetzung nach Anspruch 1, **dadurch gekennzeichnet, dass** das oder die Elastomere, die aus Naturkautschuk und synthetischen Polyisoprenen gewählt sind, wenigstens 80 pce, vorzugsweise 100 pce der Elastomermatrix repräsentieren.

3. Elastomerzusammensetzung nach Anspruch 1 oder 2, **dadurch gekennzeichnet, dass** die synthetischen Polyisoprene synthetische cis-1,4-Polyisoprene mit einem molaren Anteil von cis-1,4-Verbindungen über 90 %, vorzugsweise über 95 %, besser noch über 98 % sind.

4. Elastomerzusammensetzung nach Anspruch 1 oder 2, **dadurch gekennzeichnet, dass** das Elastomer das Naturkautschuk ist.

5. Elastomerzusammensetzung nach einem der vorhergehenden Ansprüche, **dadurch gekennzeichnet, dass** der Ruß von 20 bis 30 pce, vorzugsweise von 20 bis 25 pce repräsentiert.

6. Elastomerzusammensetzung nach einem der vorhergehenden Ansprüche, **dadurch gekennzeichnet, dass** der oder die Weichmacher aus Kohlenwasserstoffharzen mit hoher Glasübergangstemperatur (Tg), Kohlenwasserstoffharzen mit niedriger Tg, Weichmacherölen und deren Gemischen gewählt sind.

7. Elastomerzusammensetzung nach einem der vorhergehenden Ansprüche, **dadurch gekennzeichnet, dass** der oder die Weichmacher höchstens 60 pce, vorzugsweise höchstens 40 pce, besser noch von 20 bis 30 pce repräsentieren.

8. Elastomerzusammensetzung nach einem der vorhergehenden Ansprüche, **dadurch gekennzeichnet, dass** das Vernetzungssystem auf Basis von Schwefel oder eines Schwefelspenders ist.

9. Elastomerzusammensetzung nach einem der vorhergehenden Ansprüche, **dadurch gekennzeichnet, dass** das Vernetzungssystem einen Vulkanisationsbeschleuniger umfasst.

10. Reifen (1) mit einer Drehachse und einer Mittelebene (CP) senkrecht zur Drehung, umfassend
- eine Scheitelbewehrung (5),
- einen Laufstreifen (6) radial außerhalb der Scheitelbewehrung (5), wobei sich der Laufstreifen (6) axial zwischen zwei Schultern (60) erstreckt, wobei der Laufstreifen eine Kontaktfläche (61) umfasst, die dazu bestimmt ist, während des Rollens des Reifens mit der Fahrbahn in Kontakt zu treten, wobei der Laufstreifen (6) wenigstens eine Kautschukmischung einer bestimmten Steifigkeit M umfasst, und
- eine Unterschicht (7), die radial außen zur Scheitelbewehrung (5) und radial innen zum Laufstreifen (6) angeordnet ist, **dadurch gekennzeichnet, dass** auf einer Seite wenigstens axial bezogen auf die Mittelebene (CP) die Unterschicht (7) Folgendes aufweist:
- eine erste Grundschicht (71), die radial auf der Scheitelbewehrung (5) und axial zwischen der Mittelebene (CP) und einem Übergangsrand (711) angeordnet ist, wobei sich der Übergangsrand (711) axial zwischen der Mittelebene (CP) und einer Schulter (60) befindet, wobei die erste Grundschicht (71) von einer Kautschukmischung einer bestimmten Steifigkeit A gebildet ist,
- eine zweite Grundschicht (72), die radial auf der Scheitelbewehrung (5) und axial zwischen dem Übergangsrand (711) und einem Schulterende (721) angeordnet ist, wobei die zweite Grundschicht (72) von einer Elastomerzusammensetzung nach einem der vorhergehenden Ansprüche gebildet ist,
- eine Deckschicht (73), die radial auf der ersten Grundschicht (71) und auf der zweiten Grundschicht (72) und radial innerhalb des Laufstreifens (6) und axial wenigstens in Teilstücken angeordnet ist, die sich zwischen der Mittelebene (CP) und dem Schulterende (721) befinden, wobei die Deckschicht (73) von einer Kautschukmischung einer bestimmten Steifigkeit C gebildet ist,
- wobei die Steifigkeit der Elastomerzusammensetzung niedriger als die Steifigkeit A ist, die niedriger als die Steifigkeit C ist, und die Steifigkeit C höher als die Steifigkeit M ist.

11. Reifen (1) nach Anspruch 10, wobei der Laufstreifen (6) Skulpturblöcke (63) aufweist, die durch Furchen (62) getrennt sind, die im Wesentlichen in Umfangsrichtung ausgerichtet sind, **dadurch gekennzeichnet, dass** die Deckschicht (732) axial an bestimmten Skulpturblöcken (63) durch wenigstens ein verstärkendes Element (630) radial nach außen verlängert ist, das sich radial von der radial äußeren Fläche (732S) der Deckschicht (732) zum Äußeren des Laufstreifens (6) bis zu einer radialen Höhe größer als 75 % der radialen Dicke des Laufstreifens erstreckt, wobei das verstärkende Element (630) eine variable axiale Breite aufweist, von einem Maximalwert, der kleiner als 50 % der axialen Breite des Skulpturblocks ist, wobei die axiale Breite bei radialer Bewegung nach oben abnimmt.

## Claims

1. Elastomeric composition comprising
a) an elastomeric matrix comprising at least 60 phr of at least one elastomer selected from natural rubber and synthetic polyisoprenes,
b) 10 to 30 phr of a carbon black having a BET specific surface area of from 15 to 28 m²/g and a COAN index of from 20 to 60 ml/g,
c) at least 10 phr of at least one plasticizer, and
d) a crosslinking system.

2. Elastomeric composition according to Claim 1, **characterized in that** the elastomer or elastomers selected from natural rubber and synthetic polyisoprenes represent at least 80 phr, preferably 100 phr, of the elastomeric matrix.

3. Elastomeric composition according to Claim 1 or 2, **characterized in that** the synthetic polyisoprenes are synthetic cis-1,4 polyisoprenes having a molar degree of cis-1,4 bonds of more than 90%, preferably more than 95%, more preferably more than 98%.

4. Elastomeric composition according to Claim 1 or 2, **characterized in that** the elastomer is natural rubber.

5. Elastomeric composition according to any one of the preceding claims, **characterized in that** said carbon black represents from 20 to 30 phr, preferably from 20 to 25 phr.

6. Elastomeric composition according to any one of the preceding claims, **characterized in that** the plasticizer or plasticizers are selected from high glass transition temperature (Tg) hydrocarbon resins, low Tg hydrocarbon resins, plasticizing oils, and mixtures thereof.

7. Elastomeric composition according to any one of the preceding claims, **characterized in that** the plasticizer or plasticizers represent at most 60 phr, preferably at most 40 phr, more preferably from 20 to 30 phr.

8. Elastomeric composition according to any one of the preceding claims, **characterized in that** the crosslinking system is based on sulfur or a sulfur donor.

9. Elastomeric composition according to any one of the preceding claims, **characterized in that** the crosslinking system comprises a vulcanisation accelerator.

10. Tyre (1) having an axis of rotation and a median plane (CP) perpendicular to the rotation, comprising
- a crown reinforcement (5),
- a tread (6) radially on the outside of the crown reinforcement (5), the tread (6) extending axially between two shoulders (60), the tread comprising a contact face (61) intended to come into contact with the roadway when the tyre is rolling, the tread (6) comprising at least one rubber compound of given stiffness M, and
- a sub-layer (7) disposed radially on the outside of the crown reinforcement (5) and radially on the inside of the tread (6),
**characterized in that**, at least on one side axially with respect to the median plane (CP), the sub-layer (7) comprises:
- a first base layer (71) disposed radially on the crown reinforcement (5) and axially between the median plane (CP) and a transition edge (711), the transition edge (711) being situated axially between the median plane (CP) and a shoulder (60), said first base layer (71) being made up of a rubber compound of given stiffness A,
- a second base layer (72) disposed radially on the crown reinforcement (5) and axially between the transition edge (711) and a shoulder end (721), said second base layer (72) being made up of an elastomeric composition as defined in any one of the preceding claims,
- a covering layer (73) disposed radially on the first base layer (71) and on the second base layer (72) and radially on the inside of the tread (6) and axially at least in portions situated between the median plane (CP) and the shoulder end (721), said covering layer (73) being made up of a rubber compound of given stiffness C,
- the stiffness of the elastomeric composition being less than the stiffness A, which is less than the stiffness C, and the stiffness C being greater than the stiffness M.

11. Tyre (1) according to Claim 10, wherein the tread (6) comprises tread blocks (63) that are separated by furrows (62) oriented substantially circumferentially, **characterized in that** the covering layer (732), axially facing some tread blocks (63), is extended radially outwards by at least one reinforcing element (630) extending radially from the radially outer surface (732S) of the covering layer (732) towards the outside of the tread (6) up to a radial height greater than 75% of the radial thickness of the tread, said reinforcing element (630) having a variable axial width, from a maximum value less than 50% of the axial width of said tread block, said axial width decreasing radially upwardly.
